(19) Europäisches Patentamt

European Patent Office

Office européen des brevets

(11) **EP 0 992 779 B1**

(12) **EUROPÄISCHE PATENTSCHRIFT**

(45) Veröffentlichungstag und Bekanntmachung des Hinweises auf die Patenterteilung:
**21.05.2003 Patentblatt 2003/21**

(51) Int Cl.$^7$: **G01L 19/02**

(21) Anmeldenummer: **98811005.2**

(22) Anmeldetag: **06.10.1998**

(54) **Beschleunigungskompensiertes Druckmessgerät**

Acceleration compensated pressure measuring device

Dispositif de mesure de pression avec compensation de l'accélération

(84) Benannte Vertragsstaaten:
**AT CH DE DK FR GB IT LI**

(43) Veröffentlichungstag der Anmeldung:
**12.04.2000 Patentblatt 2000/15**

(73) Patentinhaber: **VIBRO-METER SA**
**CH-1700 Fribourg (CH)**

(72) Erfinder: **Schmid, Felix**
**1782 Belfaux (CH)**

(74) Vertreter:
**AMMANN PATENTANWAELTE AG BERN**
**Schwarztorstrasse 31**
**3001 Bern (CH)**

(56) Entgegenhaltungen:
EP-A- 0 902 267     DE-A- 2 303 465
DE-A- 3 909 274     GB-A- 881 802
GB-A- 899 494     GB-A- 1 194 071
JP-A- 58 055 832     US-A- 2 989 085

**Beschreibung**

Die Erfindung betrifft ein Druckmessgerät, welches eine Montageplatte und ein flexibles Trennelement enthält, welche in einer Öffnung der Montageplatte angeordnet und daran befestigt ist, und auf welches Trennelement bei der Druckmessung ein zu messender Druck wirkt.

Bei Druckmessgeräten der oben erwähnten Art wird der auf zum Beispiel eine Membrane wirkende Druck üblicherweise über eine Messung der entsprechenden auf die Membrane wirkenden Kraft mittels eines Kraftmesselementes gemessen, welches ein Signal abgibt, dessen Amplitude dem gemessenen Druck entspricht. Solche Druckmessgeräte haben eine unerwünschte Beschleunigungsempfindlichkeit, da die Membrane, welche dem Druck ausgesetzt wird, sowie das Messelement selbst eine gewisse Masse haben. Bei Beschleunigungen des gesamten Druckmessgeräts in axsialer Richtung wirkt daher auf das Kraftmesselement nicht nur die zu messende Druckkraft, sondern auch eine Trägheitskraft, welche der Druckkraft überlagert ist. Das gemessene Drucksignal ist daher fehlerhaft.

Es sind Druckmessgeräte bekannt, bei denen zur Kompensation des Beschleunigungseinflusses auf das Messergebnis zwei Messelemente verwendet werden, welche die gleiche Beschleunigungsempfindlichkeit aufweisen, wobei jedoch nur eines der Messelemente dem zu messenden Druck ausgesetzt ist. Das heisst man verwendet ein Druckmesselement und ein Beschleunigungs-Messelement. Bei solchen Druckmessgeräten wird der beschleunigungsbedingte Fehler im Messergebnis dadurch korrigiert, dass zur Bildung des Messsignals die Differenz der von den Messelementen abgegebenen Signale gebildet wird.

Diese bekannten Druckmessgeräte haben den Nachteil, dass zwei separate Messelemente benötigt werden, was die Herstellungskosten erhöht. Die zwei separaten Messelemente haben ausserdem meistens verschiedene Grundempfindlichkeiten und müssen daher abgeglichen werden.

Die verwendeten Messelemente haben in der Regel auch verschiedene Temperaturgänge und Frequenzgänge. Die erzielte Kompensation ist daher meist frequenz- und temperaturabhängig.

Die nicht-vorveröffentlichte europäische Patentanmeldung EP-A2-0 902 267 beschreibt einen beschleunigungskompensierten Druckaufnehmer, bei welchem die Kompensationswirkung dadurch erreicht wird, dass die Masse des Membranbodens und die Kompensationsmasse mittels Hülse verbunden werden und die Massen und Federsteifigkeiten der Membrane und Hülse optimiert werden.

Der Erfindung liegt die Aufgabe zugrunde, ein Druckmessgerät der oben erwähnten Art zur Verfügung zustellen, welches ein einziges Messelement enthält, welches Messelement derart eingebaut ist, dass der Beschleunigungseinfluss kompensiert wird, und welche Beschleunigungskompensation weitgehend unabhängig vom Temperaturgang, Frequenzgang und von der Alterung des Messelements ist.

Erfindungsgemäss wird diese Aufgabe mit einem Druckmessgerät nach dem Patentanspruch gelöst.

Die mit einem erfindungsgemässen Druckmessgerät erzielten Vorteile liegen insbesondere darin, dass damit praktisch ohne Erhöhung der Herstellungskosten beschleunigungskompensierte Messergebnisse erzielt werden, welche weitgehend unabhängig von Temperaturgang, Frequenzgang und Alterung des Messelements sind.

Im Folgenden werden Ausführungsbeispiele der Erfindung anhand der beiliegenden Figuren beschrieben.

Fig. 1 zeigt einen Querschnitt einer ersten Ausführungsform eines erfindungsgemässen Druckmessgerätes entlang der Symmetrieachse desselben.

Fig. 2 zeigt einen Querschnitt einer zweiten Ausführungsform eines erfindungsgemässen Druckmessgerätes entlang der Symmetrieachse desselben.

Fig. 3 zeigt einen Querschnitt einer dritten Ausführungsform eines erfindungsgemässen Druckmessgerätes entlang der Symmetrieachse desselben.

**Ausführungsbeispiel 1**

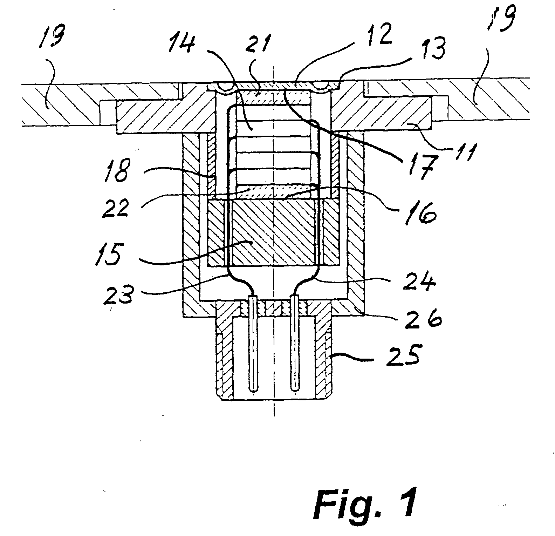

Figur 1 zeigt eine erste Ausführungsform eines erfindungsgemässen Druckmessgerätes. Dieses enthält eine Montageplatte 11, eine Membrane 12 und einen Referenzkörper 15. Die Montageplatte 11 ist z.B. in einem Ausschnitt einer Armatur 19 befestigt, in der ein Druck zu messen ist.

Die Membrane 12 ist in einer Öffnung 13 der Montageplatte 11 angeordnet und darin eingeschweisst. Bei einer Druckmessung wird das Druckmessgerät so verwendet, dass der zu messende Druck auf die Membrane 12 wirkt.

Anstelle der Membran 12 kann ein anderes flexibles Trennelement, z.B. ein Faltenbalg oder eine dünne Hülse, verwendet werden.

Der Referenzkörper 15 ist mit der Montageplatte 11 über eine Aufhängung 18 verbunden. Der Referenzkörper 15 hat eine Referenzfläche 16, welche gegenüber einer Oberfläche 17 der Membrane 12 liegt. Alle diese Teile sind vorzugsweise miteinander verschweisst. Sie können aber auch geklebt oder sonst wie verbunden sein.

Im Ausführungsbeispiel gemäss Figur 1 enthält das erfindungsgemässe Druckmessgerät ausserdem ein Kraftmesselement 14, welches zwischen der Membranoberfläche 17 und der Referenzfläche 16 des Referenzkörpers 15 angeordnet ist. Das Kraftmesselement 14 besteht z.B. aus fünf piezoelektrischen Scheiben und ist durch Isolationsscheiben 21, 22 von der Membrane 12 und vom Referenzkörper 15 elektrisch isoliert.

Anstelle eines piezoelektrischen Kraftmesselementes können natürlich auch andere, technisch äquivalente Kraftmesselemente verwendet werden, z. B. piezopermitive Wandler, magnetostriktive Wandler oder piezoresistive Wandler.

Die elektrischen Anschlüsse 23 und 24 des Kraftmesselementes 14 sind durch Bohrungen des Referenzkörpers 15 geführt und mit einem Stecker 25 verbunden, der von einem Gehäusedeckel 26 getragen wird.

Die Membrane 12, das Kraftmesselement 14, die Isolationsscheiben 21, 22 und der Referenzkörper 15 sind miteinander durch mechanische Vorspannung verbunden. Diese Vorspannung wird durch Einfederung der Membrane und Dehnung der Aufhängung 18 erzeugt.

Das Kraftmesselement 14 liegt über die Isolationsscheibe 21 an der Membrane 12 an und stützt sich über die Isolationsscheibe 22 an einer Referenzfläche 16 des Referenzkörpers 15 ab.

Die Membrane 12, der Referenzkörper 15 und die Aufhängung 18 sind so beschaffen, dass dann wenn das ganze Druckmessgerät unter der Einwirkung einer Beschleunigung steht, die dadurch verursachten Auslenkungen der Membranoberfläche 17 und der Referenzfläche 16 des Referenzkörpers 15 in Richtung der Messachse des Kraftmesselements gleich gross sind. Dies wird erfindungsgemäss vorzugsweise dadurch erreicht, dass die wirksame Masse Mm und die Dehnsteifigkeit Cm der Membrane 12 einerseits, und die wirksame Masse Mr und die Dehnsteifigkeit Cr des Referenzkörpers 15 andererseits, zueinander so abgestimmt sind, dass dann wenn das ganze Druckmessgerät unter der Einwirkung einer Beschleunigungskraft steht, die dadurch verursachten Auslenkungen der Membranoberfläche 17 und der Referenzfläche 16 des Referenzkörpers 15 in Richtung der Messachse des Kraftmesselements gleich gross sind.

Dadurch ist sichergestellt, dass das Kraftmesselement keine beschleunigungsbedingte Längenänderung erfährt und somit auch keine Kraftänderung misst.

Mm und Cm einerseits und Mr und Cr andererseits werden z.B. wie folgt definiert:
Eine für die Beschleunigungsempfindlichkeit der Messanordnung wirksame Membranmasse Mm besteht annähernd aus der Masse des beweglichen Teils der Membrane 12 selbst, der Masse der Isolationsscheibe 21 und etwa der Hälfte der Masse des Kraftmesselementes 14. Die Dehnsteifigkeit Cm der Membrane 12 ist jene Kraft, die nötig ist, um die Membrane für sich alleine um eine Längeneinheit in der Messrichtung des Kraftmesselementes 14 auszulenken.

Eine für die Kompensation der Beschleunigungsempfindlichkeit der Messanordnung wirksame Referenzmasse Mr besteht aus der Masse des Referenzkörpers, der Masse der Isolationsscheibe 22, etwa der Hälfte der Masse des Kraftmesselementes 14, sowie aus etwa der Hälfte der Masse der Aufhängung 18. Die Dehnsteifigkeit Cr der Aufhängung 18 ist jene Kraft, die nötig ist, um den Referenzkörper für sich alleine um eine Längeneinheit in der Messrichtung des Kraftmesselements auszulenken.

Wenn das Druckmessgerät einer Beschleunigung a ausgesetzt wird, werden gleichzeitig die Membranoberfläche 17 der Membrane 12 um eine Auslenkung Dm und die Referenzfläche 16 des Referenzkörpers 15 um eine Auslenkung Dr verschoben. Erfindungsgemäss soll dabei das Kraftmesselement keine Kraftänderung, das heisst also keine Längenänderung, erfahren.

Die durch eine Beschleunigung a verursachte Auslenkung Dm der Membrane 12 beträgt

$$(1) \qquad Dm = a * Mm/Cm$$

Die durch eine Beschleunigung a verursachte Auslenkung Dr der Referenzfläche 16 des Referenzkörpers 15 beträgt

$$(2) \qquad Dr = a * Mr/Cr$$

Die Dehnsteifigkeit Cr und die Referenzmasse Mr sind erfindungsgemäss so ausgelegt, dass die Verhältnisse Mm/Cm und Mr/Cr gleich sind. Es gilt daher

$$(3) \qquad Mm/Cm = Mr/Cr$$

Aus (1), (2), und (3) ergibt sich, dass in einem erfindungsgemässen Druckmessgerät die beschleunigungsbedingte Auslenkung Dm der Membrane und die beschleunigungsbedingte Auslenkung Dr der Referenzfläche 16 des Referenzkörpers 15 gleich sind, d.h.

$$(4) \qquad Dm = Dr$$

Folglich wird durch die erfindungsgemässe Beziehung Mm/Cm = Mr/Cr sichergestellt, dass das zwischen Membrane 12 und Referenzkörper 15 angeordnete Kraftmesselement 14 keine beschleunigungsbedingte Längenänderung (beziehungsweise Kraftänderung) erfährt und damit kein beschleunigungsbedingter Fehler des vom Kraftmesselement 14 abgegebenen Messsignals zustande kommen kann.

Die obigen Überlegungen gelten unter der Annahme, dass alle beteiligten Teile homogen sind und dass auch das Kraftmesselement eine homogene Verteilung der Empfindlichkeit über seine Länge hat. Falls diese Annahmen für eine bestimmte Ausführungsform nicht genügend genau sind, kann zum Beispiel durch eine Analyse mittels finiter Elemente die Struktur genauer analysiert werden. Es kann jedoch auch in diesem Fall erfindungsgemäss eine wirksame Dehnsteifigkeit Cr und Referenzkörpermasse Mr gefunden werden, um die Bedingungen zu befriedigen, dass die beschleunigungsbedingten Auslenkungen beider Endflächen des Messelements gleich sind und somit keine beschleunigungsbedingten Kraftänderungen registriert werden.

Die Empfindlichkeit des Druckmessgeräts wird durch die erfindungsgemässe Beschleunigungskompensation im Vergleich mit einer Ausführung ohne Beschleunigungskompensation etwas verringert, weil das Kraftmesselement nicht auf einem starren Untergrund steht, sondern über die elastische Aufhängung 18 abgeschlossen ist. Je stärker die Aufhängung 18 gedehnt wird, desto stärker deformiert sich auch die Membrane 12. Die Membrane absorbiert also in sich selber einen Teil der Druckkraft, was zur erwähnten Verringerung der Empfindlichkeit führt. Es ist deshalb eine bevorzugte Ausführung, dass die Dehnsteifigkeit Cr der Aufhängung 18 wesentlich grösser gewählt wird als die Dehnsteifigkeit Cm der Membrane.

Bei einem Prozess zur Herstellung eines erfindungsgemässen Druckmessgerätes kann die Masse Mr Z.B. durch Abdrehen von Material am Referenzkörper 15 und/oder die Dehnsteifigkeit Cr durch Bearbeitung der Aufhängung 18 in einfacher Weise kalibriert werden, um etwaige Toleranzen in Bezug auf die Masse und die Dehnsteifigkeit der beteiligten Teile auszugleichen, falls dies überhaupt notwendig erscheint. Da die Wiederholbarkeit einer genauen Beschleunigungskompensation erfindungsgemäss jedoch ausschliesslich von den mechanischen Toleranzen der beteiligten Teile sowie deren spezifischen Massen abhängt, kann in der Regel auf eine Kalibration verzichtet werden, was einer der Vorteile eines erfindungsgemässen Druckmessgerätes ist.

Im Weiteren ist bei einem abgeglichenen erfindungsgemässen Druckmessgerät die erste Resonanzfrequenz $\omega_m = \sqrt{Cm/Mm}$ der Membrane gleich der ersten Resonanzfrequenz $\omega_r = \sqrt{Cr/Mr}$ des Referenzkörpers. Dadurch ist die Beschleunigungskompensation über einen breiten Frequenzbereich bis sehr nahe an die Resonanzfrequenz wirksam.

Ein weiterer Vorteil der erfindungsgemässen Beschleunigungskompensation besteht darin, dass eine einmal abgestimmte Beschleunigungskompensation des Druckmessgerätes unter allen Umständen erhalten bleibt, da sie nur von den Massen Mm und Mr sowie den Dehnsteifigkeiten Cm, Cr abhängig ist.

In einer bevorzugten Ausführungsform werden die Membrane 12 und die Aufhängung 18 aus dem gleichen Werkstoff hergestellt. In diesem Fall haben diese beiden Komponenten den gleichen Elastizitätsmodul E. Dies hat den Vorteil, dass die Beschleunigungskompensation unabhängig von der Temperatur ist.

Die Beschleunigungskompensation ist auch unabhängig von der spezifischen Empfindlichkeit des Kraftmesselementes 14 und ist somit auch unabhängig vom Temperaturgang oder von einer etwaigen Alterung des Kraftmesselementes.

**Ausführungsbeispiel 2**

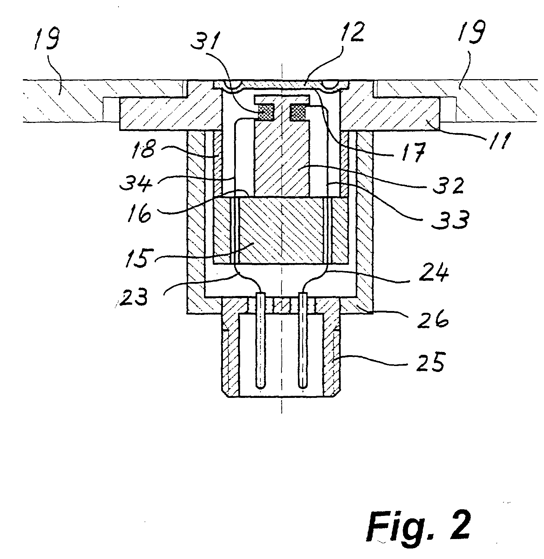

Figur 2 zeigt eine zweite Ausführungsform eines erfindungsgemässen Druckmessgerätes. Diese Ausführungsform enthält im Wesentlichen die gleichen Komponenten wie das Ausführungsbeispiel 1 mit Ausnahme des Kraftmesselementes 14, welches weggelassen wird. Anstelle der Kraftmessung mittels eines Kraftmesselementes wird gemäss diesem zweiten Ausführungsbeispiel eine Abstandsänderung zwischen der Membrane 12 und dem Referenzkörper 15 kontaktlos gemessen. Dazu werden an sich bekannte Mittel zur Durchführung einer Abstandsmessung verwendet, zum Beispiel eine Anordnung zur kapazitiven oder induktiven Abstandsmessung oder eine Anordnung zur optischen Abstandsmessung.

Bei der Ausführungsform gemäss Figur 2 wird die Abstandsvariation der Membrane 12 gegenüber dem Referenzkörper 15 durch eine Spule 31 gemessen, welche auf einen Spulenkörper 32 gewickelt ist, und welcher Spulenkörper auf den Referenzkörper 15 geklebt ist. Durch die beiden Anschlussdrähte 33 und 34 wird ein hochfrequenter Wechselstrom geleitet. Die Membrane 12 ist aus Metall. Die Spule 31 induziert in die Membrane 12 Wirbelströme, welche vom Abstand zwischen der Membrane 12 und der Spule 31 abhängig sind. Die dadurch bewirkte Änderung der Impedanz der Spule 31 kann als Mass für die Abstandsänderung und somit für den zu messenden Druck verwendet werden.

Alle Überlegungen betreffend die Beschleunigungskompensation gelten für diese zweite Ausführungsform genau gleich wie für die erste Ausführungsform gemäss Fig. 1, mit der offensichtlichen Ausnahme, dass bei der zweiten Ausführungsform die Masse der Spule 31 und des Spulenkörpers 32 gänzlich zur Masse Mr des Referenzkörpers 15 hinzuzurechnen ist und dass zu der Masse Mm der Membrane kein Anteil des Messelements hinzuzurechnen ist.

**Ausführungsbeispiel 3**

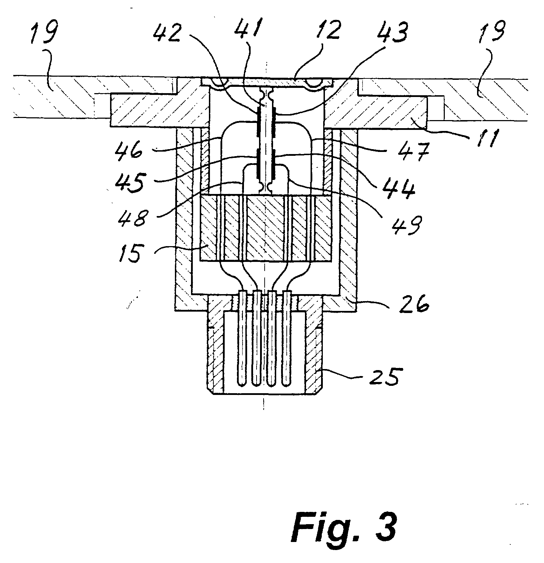

Figur 3 zeigt eine dritte Ausführungsform eines erfindungsgemässen Druckmessgerätes. Auch diese Ausführungsform enthält im Wesentlichen die gleichen Komponenten wie das Ausführungsbeispiel 1 mit Ausnahme des Kraftmesselementes 14, welches weggelassen wird. Anstelle der Kraftmessung mittels eines Kraftmesselementes wird gemäss diesem dritten Ausführungsbeispiel ein Schwingelement 41, z.B. ein schwingender Balken oder eine schwingende Seite, zwischen die Membrane 12 und den Referenzkörper 15 gespannt.

Bei der Ausführungsform gemäss Figur 3 wird das Schwingelement 41, welches hier aus piezoelektrischem Material ist, vorzugsweise etwa im Zentrum der Membrane 12 montiert und in senkrechter Richtung mit dem Referenzkörper 15 verbunden. Der Schwingkörper wird durch zwei Elektroden 42 und 43 in bekannter Weise in Biegeschwingungen versetzt. Die Resonanzfrequenz dieser Schwingungen, welche mittels des Elektrodenpaars 44, 45 gemessen werden kann, wird dann durch die auf das Schwingelement über die Membrane 12 wirkende Druckkraftgeändert. Aus dieser Änderung der Resonanzfrequenz wird ein Nutzsignal gewonnen, das dem zu messenden Druck entspricht.

Die Anschlussdrähte 46-49 bilden die nötigen Anschlüsse für die Elektroden 42-45.

Alle Überlegungen betreffend die Beschleunigungskompensation gelten für diese dritte Ausführungsform genau gleich wie für die erste Ausführungsform gemäss Fig. 1, wobei bei der dritten Ausführungsform das Kraftmesselement durch das Schwingelement ersetzt wird.

Die Erfindung betrifft ein Druckmessgerät, welches eine Montageplatte und ein flexibles Trennelement enthält, welche in einer Öffnung der Montageplatte angeordnet und daran befestigt ist, und auf welches Trennelement bei der Druckmessung ein zu messender Druck wirkt.

Bei Druckmessgeräten der oben erwähnten Art wird der auf zum Beispiel eine Membrane wirkende Druck üblicherweise über eine Messung der entsprechenden auf die Membrane wirkenden Kraft mittels eines Kraftmesselementes gemessen, welches ein Signal abgibt, dessen Amplitude dem gemessenen Druck entspricht. Solche Druckmessgeräte haben eine unerwünschte Beschleunigungsempfindlichkeit, da die Membrane, welche dem Druck ausgesetzt wird, sowie das Messelement selbst eine gewisse Masse haben. Bei Beschleunigungen des gesamten Druckmessgeräts in axsialer Richtung wirkt daher auf das Kraftmesselement nicht nur die zu messende Druckkraft, sondern auch eine Trägheitskraft, welche der Druckkraft überlagert ist. Das gemessene Drucksignal ist daher fehlerhaft.

Es sind Druckmessgeräte bekannt, bei denen zur Kompensation des Beschleunigungseinflusses auf das Messergebnis zwei Messelemente verwendet werden, welche die gleiche Beschleunigungsempfindlichkeit aufweisen, wobei jedoch nur eines der Messelemente dem zu messenden Druck ausgesetzt ist. Das heisst man verwendet ein Druckmesselement und ein Beschleunigungs-Messelement. Bei solchen Druckmessgeräten wird der beschleunigungsbedingte Fehler im Messergebnis dadurch korrigiert, dass zur Bildung des Messsignals die Differenz der von den Messelementen abgegebenen Signale gebildet wird.

Diese bekannten Druckmessgeräte haben den Nachteil, dass zwei separate Messelemente benötigt werden, was die Herstellungskosten erhöht. Die zwei separaten Messelemente haben ausserdem meistens verschiedene Grundempfindlichkeiten und müssen daher abgeglichen werden.

Die verwendeten Messelemente haben in der Regel auch verschiedene Temperaturgänge und Frequenzgänge. Die erzielte Kompensation ist daher meist frequenz- und temperaturabhängig.

A Die nicht-vorveröffentlichte europäische Patentanmeldung EP-A2-0 902 267 beschreibt einen beschleunigungskompensierten Druckaufnehmer, bei welchem die Kompensationswirkung dadurch erreicht wird, dass die Masse des Membranbodens und die Kompensationsmasse mittels Hülse verbunden werden und die Massen und Federsteifigkeiten der Membrane und Hülse optimiert werden.

Der Erfindung liegt die Aufgabe zugrunde, ein Druckmessgerät der oben erwähnten Art zur Verfügung zustellen, welches ein einziges Messelement enthält, welches Messelement derart eingebaut ist, dass der Beschleunigungseinfluss kompensiert wird, und welche Beschleunigungskompensation weitgehend unabhängig vom Temperaturgang, Frequenzgang und von der Alterung des Messelements ist.

Erfindungsgemäss wird diese Aufgabe mit einem Druckmessgerät nach einem der unabhängigen Patentansprüche gelöst.

Die mit einem erfindungsgemässen Druckmessgerät erzielten Vorteile liegen insbesondere darin, dass damit praktisch ohne Erhöhung der Herstellungskosten beschleunigungskompensierte Messergebnisse erzielt werden, welche weitgehend unabhängig von Temperaturgang, Frequenzgang und Alterung des Messelements sind.

Im Folgenden werden Ausführungsbeispiele der Erfindung anhand der beiliegenden Figuren beschrieben.

Fig. 1 zeigt einen Querschnitt einer ersten Ausführungsform eines erfindungsgemässen Druckmessgerätes entlang der Symmetrieachse desselben.

Fig. 2 zeigt einen Querschnitt einer zweiten Ausführungsform eines erfindungsgemässen Druckmessgerätes entlang der Symmetrieachse desselben.

Fig. 3 zeigt einen Querschnitt einer dritten Ausführungsform eines erfindungsgemässen Druckmessgerätes entlang der Symmetrieachse desselben.

## Ausführungsbeispiel 1

Figur 1 zeigt eine erste Ausführungsform eines erfindungsgemässen Druckmessgerätes. Dieses enthält eine Montageplatte 11, eine Membrane 12 und einen Referenzkörper 15. Die Montageplatte 11 ist z.B. in einem Ausschnitt einer Armatur 19 befestigt, in der ein Druck zu messen ist.

Die Membrane 12 ist in einer Öffnung 13 der Montageplatte 11 angeordnet und darin eingeschweisst. Bei einer Druckmessung wird das Druckmessgerät so verwendet, dass der zu messende Druck auf die Membrane 12 wirkt.

Anstelle der Membran 12 kann ein anderes flexibles Trennelement, z.B. ein Faltenbalg oder eine dünne Hülse, verwendet werden.

Der Referenzkörper 15 ist mit der Montageplatte 11 über eine Aufhängung 18 verbunden. Der Referenzkörper 15 hat eine Referenzfläche 16, welche gegenüber einer Oberfläche 17 der Membrane 12 liegt. Alle diese Teile sind vorzugsweise miteinander verschweisst. Sie können aber auch geklebt oder sonst wie verbunden sein.

Im Ausführungsbeispiel gemäss Figur 1 enthält das erfindungsgemässe Druckmessgerät ausserdem ein Kraftmesselement 14, welches zwischen der Membranoberfläche 17 und der Referenzfläche 16 des Referenzkörpers 15 angeordnet ist. Das Kraftmesselement 14 besteht z.B. aus fünf piezoelektrischen Scheiben und ist durch Isolationsscheiben 21, 22 von der Membrane 12 und vom Referenzkörper 15 elektrisch isoliert.

Anstelle eines piezoelektrischen Kraftmesselementes können natürlich auch andere, technisch äquivalente Kraftmesselemente verwendet werden, z. B. piezopermitive Wandler, magnetostriktive Wandler oder piezoresistive Wandler.

Die elektrischen Anschlüsse 23 und 24 des Kraftmesselementes 14 sind durch Bohrungen des Referenzkörpers 15 geführt und mit einem Stecker 25 verbunden, der von einem Gehäusedeckel 26 getragen wird.

Die Membrane 12, das Kraftmesselement 14, die Isolationsscheiben 21, 22 und der Referenzkörper 15 sind miteinander durch mechanische Vorspannung verbunden. Diese Vorspannung wird durch Einfederung der Membrane und Dehnung der Aufhängung 18 erzeugt.

Das Kraftmesselement 14 liegt über die Isolationsscheibe 21 an der Membrane 12 an und stützt sich über die Isolationsscheibe 22 an einer Referenzfläche 16 des Referenzkörpers 15 ab.

Die Membrane 12, der Referenzkörper 15 und die Aufhängung 18 sind so beschaffen, dass dann wenn das ganze Druckmessgerät unter der Einwirkung einer Beschleunigung steht, die dadurch verursachten Auslenkungen der Membranoberfläche 17 und der Referenzfläche 16 des Referenzkörpers 15 in Richtung der Messachse des Kraftmesselements gleich gross sind. Dies wird erfindungsgemäss vorzugsweise dadurch erreicht, dass die wirksame Masse Mm und die Dehnsteifigkeit Cm der Membrane 12 einerseits, und die wirksame Masse Mr und die Dehnsteifigkeit Cr des Referenzkörpers 15 andererseits, zueinander so abgestimmt sind, dass dann wenn das ganze Druckmessgerät unter der Einwirkung einer Beschleunigungskraft steht, die dadurch verursachten Auslenkungen der Membranoberfläche 17 und der Referenzfläche 16 des Referenzkörpers 15 in Richtung der Messachse des Kraftmesselements gleich gross sind.

Dadurch ist sichergestellt, dass das Kraftmesselement keine beschleunigungsbedingte Längenänderung erfährt und somit auch keine Kraftänderung misst.

Mm und Cm einerseits und Mr und Cr andererseits werden z.B. wie folgt definiert: Eine für die Beschleunigungsempfindlichkeit der Messanordnung wirksame Membranmasse Mm besteht annähernd aus der Masse des beweglichen Teils der Membrane 12 selbst, der Masse der Isolationsscheibe 21 und etwa der Hälfte der Masse des Kraftmesselementes 14. Die Dehnsteifigkeit Cm der Membrane 12 ist jene Kraft, die nötig ist, um die Membrane für sich alleine um eine Längeneinheit in der Messrichtung des Kraftmesselementes 14 auszulenken.

Eine für die Kompensation der Beschleunigungsempfindlichkeit der Messanordnung wirksame Referenzmasse Mr besteht aus der Masse des Referenzkörpers, der Masse der Isolationsscheibe 22, etwa der Hälfte der Masse des Kraftmesselementes 14, sowie aus etwa der Hälfte der Masse der Aufhängung 18. Die Dehnsteifigkeit Cr der Aufhängung 18 ist jene Kraft, die nötig ist, um den Referenzkörper für sich alleine um eine Längeneinheit in der Messrichtung des Kraftmesselements auszulenken.

Wenn das Druckmessgerät einer Beschleunigung a ausgesetzt wird, werden gleichzeitig die Membranoberfläche 17 der Membrane 12 um eine Auslenkung Dm und die Referenzfläche 16 des Referenzkörpers 15 um eine Auslenkung Dr verschoben. Erfindungsgemäss soll dabei das Kraftmesselement keine Kraftänderung, das heisst also keine Längenänderung, erfahren.

Die durch eine Beschleunigung a verursachte Auslenkung Dm der Membrane 12 beträgt

$$(1) \qquad Dm = a * Mm/Cm$$

Die durch eine Beschleunigung a verursachte Auslenkung Dr der Referenzfläche 16 des Referenzkörpers 15 beträgt

$$(2) \qquad Dr = a * Mr/Cr$$

Die Dehnsteifigkeit Cr und die Referenzmasse Mr sind erfindungsgemäss so ausgelegt, dass die Verhältnisse Mm/Cm und Mr/Cr gleich sind. Es gilt daher

$$(3) \qquad Mm/Cm = Mr/Cr$$

Aus (1), (2), und (3) ergibt sich, dass in einem erfindungsgemässen Druckmessgerät die beschleunigungsbedingte Auslenkung Dm der Membrane und die beschleunigungsbedingte Auslenkung Dr der Referenzfläche 16 des Referenzkörpers 15 gleich sind, d.h.

(4)     Dm = Dr

Folglich wird durch die erfindungsgemässe Beziehung Mm/Cm = Mr/Cr sichergestellt, dass das zwischen Membrane 12 und Referenzkörper 15 angeordnete Kraftmesselement 14 keine beschleunigungsbedingte Längenänderung (beziehungsweise Kraftänderung) erfährt und damit kein beschleunigungsbedingter Fehler des vom Kraftmesselement 14 abgegebenen Messsignals zustande kommen kann.

Die obigen Überlegungen gelten unter der Annahme, dass alle beteiligten Teile homogen sind und dass auch das Kraftmesselement eine homogene Verteilung der Empfindlichkeit über seine Länge hat. Falls diese Annahmen für eine bestimmte Ausführungsform nicht genügend genau sind, kann zum Beispiel durch eine Analyse mittels finiter Elemente die Struktur genauer analysiert werden. Es kann jedoch auch in diesem Fall erfindungsgemäss eine wirksame Dehnsteifigkeit Cr und Referenzkörpermasse Mr gefunden werden, um die Bedingungen zu befriedigen, dass die beschleunigungsbedingten Auslenkungen beider Endflächen des Messelements gleich sind und somit keine beschleunigungsbedingten Kraftänderungen registriert werden.

Die Empfindlichkeit des Druckmessgeräts wird durch die erfindungsgemässe Beschleunigungskompensation im Vergleich mit einer Ausführung ohne Beschleunigungskompensation etwas verringert, weil das Kraftmesselement nicht auf einem starren Untergrund steht, sondern über die elastische Aufhängung 18 abgeschlossen ist. Je stärker die Aufhängung 18 gedehnt wird, desto stärker deformiert sich auch die Membrane 12. Die Membrane absorbiert also in sich selber einen Teil der Druckkraft, was zur erwähnten Verringerung der Empfindlichkeit führt. Es ist deshalb eine bevorzugte Ausführung, dass die Dehnsteifigkeit Cr der Aufhängung 18 wesentlich grösser gewählt wird als die Dehnsteifigkeit Cm der Membrane.

Bei einem Prozess zur Herstellung eines erfindungsgemässen Druckmessgerätes kann die Masse Mr z.B. durch Abdrehen von Material am Referenzkörper 15 und/oder die Dehnsteifigkeit Cr durch Bearbeitung der Aufhängung 18 in einfacher Weise kalibriert werden, um etwaige Toleranzen in Bezug auf die Masse und die Dehnsteifigkeit der beteiligten Teile auszugleichen, falls dies überhaupt notwendig erscheint. Da die Wiederholbarkeit einer genauen Beschleunigungskompensation erfindungsgemäss jedoch ausschliesslich von den mechanischen Toleranzen der beteiligten Teile sowie deren spezifischen Massen abhängt, kann in der Regel auf eine Kalibration verzichtet werden, was einer der Vorteile eines erfindungsgemässen Druckmessgerätes ist.

Im Weiteren ist bei einem abgeglichenen erfindungsgemässen Druckmessgerät die erste Resonanzfrequenz $\omega_m = \sqrt{Cm/Mm}$ der Membrane gleich der ersten Resonanzfrequenz $\omega_r = \sqrt{Cr/Mr}$ des Referenzkörpers. Dadurch ist die Beschleunigungskompensation über einen breiten Frequenzbereich bis sehr nahe an die Resonanzfrequenz wirksam.

Ein weiterer Vorteil der erfindungsgemässen Beschleunigungskompensation besteht darin, dass eine einmal abgestimmte Beschleunigungskompensation des Druckmessgerätes unter allen Umständen erhalten bleibt, da sie nur von den Massen Mm und Mr sowie den Dehnsteifigkeiten Cm, Cr abhängig ist.

In einer bevorzugten Ausführungsform werden die Membrane 12 und die Aufhängung 18 aus dem gleichen Werkstoff hergestellt. In diesem Fall haben diese beiden Komponenten den gleichen Elastizitätsmodul E. Dies hat den Vorteil, dass die Beschleunigungskompensation unabhängig von der Temperatur ist.

Die Beschleunigungskompensation ist auch unabhängig von der spezifischen Empfindlichkeit des Kraftmesselementes 14 und ist somit auch unabhängig vom Temperaturgang oder von einer etwaigen Alterung des Kraftmesselementes.

**Ausführungsbeispiel 2**

Figur 2 zeigt eine zweite Ausführungsform eines erfindungsgemässen Druckmessgerätes. Diese Ausführungsform enthält im Wesentlichen die gleichen Komponenten wie das Ausführungsbeispiel 1 mit Ausnahme des Kraftmesselementes 14, welches weggelassen wird. Anstelle der Kraftmessung mittels eines Kraftmesselementes wird gemäss diesem zweiten Ausführungsbeispiel eine Abstandsänderung zwischen der Membrane 12 und dem Referenzkörper 15 kontaktlos gemessen. Dazu werden an sich bekannte Mittel zur Durchführung einer Abstandsmessung verwendet, zum Beispiel eine Anordnung zur kapazitiven oder induktiven Abstandsmessung oder eine Anordnung zur optischen Abstandsmessung.

Bei der Ausführungsform gemäss Figur 2 wird die Abstandsvariation der Membrane 12 gegenüber dem Referenzkörper 15 durch eine Spule 31 gemessen, welche auf einen Spulenkörper 32 gewickelt ist, und welcher Spulenkörper auf den Referenzkörper 15 geklebt ist. Durch die beiden Anschlussdrähte 33 und 34 wird ein hochfrequenter Wechselstrom geleitet. Die Membrane 12 ist aus Metall. Die Spule 31 induziert in die Membrane 12 Wirbelströme, welche vom Abstand zwischen der Membrane 12 und der Spule 31 abhängig sind. Die dadurch bewirkte Änderung der Impedanz der Spule 31 kann als Mass für die Abstandsänderung und somit für den zu messenden Druck verwendet werden.

Alle Überlegungen betreffend die Beschleunigungskompensation gelten für diese zweite Ausführungsform genau gleich wie für die erste Ausführungsform gemäss Fig. 1, mit der offensichtlichen Ausnahme, dass bei der zweiten Ausführungsform die Masse der Spule 31 und des Spulenkörpers 32 gänzlich zur Masse Mr des Referenzkörpers 15 hinzuzurechnen ist und dass zu der Masse Mm der Membrane kein Anteil des Messelements hinzuzurechnen ist.

## Ausführungsbeispiel 3

Figur 3 zeigt eine dritte Ausführungsform eines erfindungsgemässen Druckmessgerätes. Auch diese Ausführungsform enthält im Wesentlichen die gleichen Komponenten wie das Ausführungsbeispiel 1 mit Ausnahme des Kraftmesselementes 14, welches weggelassen wird. Anstelle der Kraftmessung mittels eines Kraftmesselementes wird gemäss diesem dritten Ausführungsbeispiel ein Schwingelement 41, z.B. ein schwingender Balken oder eine schwingende Seite, zwischen die Membrane 12 und den Referenzkörper 15 gespannt.

Bei der Ausführungsform gemäss Figur 3 wird das Schwingelement 41, welches hier aus piezoelektrischem Material ist, vorzugsweise etwa im Zentrum der Membrane 12 montiert und in senkrechter Richtung mit dem Referenzkörper 15 verbunden. Der Schwingkörper wird durch zwei Elektroden 42 und 43 in bekannter Weise in Biegeschwingungen versetzt. Die Resonanzfrequenz dieser Schwingungen, welche mittels des Elektrodenpaars 44, 45 gemessen werden kann, wird dann durch die auf das Schwingelement über die Membrane 12 wirkende Druckkraft geändert. Aus dieser Änderung der Resonanzfrequenz wird ein Nutzsignal gewonnen, das dem zu messenden Druck entspricht.

Die Anschlussdrähte 46-49 bilden die nötigen Anschlüsse für die Elektroden 42-45.

Alle Überlegungen betreffend die Beschleunigungskompensation gelten für diese dritte Ausführungsform genau gleich wie für die erste Ausführungsform gemäss Fig. 1, wobei bei der dritten Ausführungsform das Kraftmesselement durch das Schwingelement ersetzt wird.

## Patentansprüche

## Patentansprüche für folgende Vertragsstaaten : DK, IT

1. Druckmessgerät, welches eine Montageplatte (11) und ein flexibles Trennelement (12) enthält, welches in einer Öffnung (13) der Montageplatte (11) angeordnet und daran befestigt ist und auf welches Trennelement (12) bei der Druckmessung ein zu messender Druck wirkt, welches Druckmessgerät **dadurch gekennzeichnet ist, dass** es ferner

  (a) einen Referenzkörper (15) enthält, welcher mit der Montageplatte (11) über eine Aufhängung (18) verbunden ist und eine Referenzfläche (16) hat, die gegenüber einer Oberfläche (17) des Trennelementes (12) liegt, und
  (b) ein Sensorelement (14, 41) enthält, welches zwischen dem Trennelement (12) und dem Referenzkörper (15) angeordnet ist,

  wobei der Referenzkörper (15) und die Aufhängung (18) so beschaffen sind, dass dann, wenn das ganze Druckmessgerät unter der Einwirkung einer Beschleunigung steht, die dadurch verursachte Auslenkung der Referenzfläche (16) des Referenzkörpers (15) gleich gross ist wie die beschleunigungsbedingte Auslenkung der Oberfläche (17) des Trennelementes (12).

2. Druckmessgerät gemäss Anspruch 1, **dadurch gekennzeichnet, dass** die wirksame Masse Mm und die Dehnsteifigkeit Cm des Trennelementes (12) einerseits, und die wirksame Masse Mr und die Dehnsteifigkeit Cr des Referenzkörpers (15) andererseits, zueinander so abgestimmt sind, dass dann, wenn das ganze Druckmessgerät unter der Einwirkung einer Beschleunigung steht, die dadurch verursachten axialen Auslenkungen der Oberfläche (17) des Trennelementes (12) und der Referenzfläche (16) des Referenzkörpers (15) gleich gross sind.

3. Druckmessgerät gemäss Anspruch 2, **dadurch gekennzeichnet, dass** Mm/Cm = Mr/Cr wobei in Mm ein Teil der Masse von allfälligen Elementen eingeschlossen ist, die mit dem Trennelement (12) verbunden sind, und wobei in Mr ein Teil der Masse von allfälligen Elementen eingeschlossen ist, die mit dem Referenzkörper (15) verbunden sind.

4. Druckmessgerät gemäss Anspruch 1, **dadurch gekennzeichnet, dass** das Trennelement (12) und die Aufhängung (18) aus dem gleichen Werkstoff hergestellt werden.

5. Druckmessgerät nach einem der Ansprüche 1 bis 4, **dadurch gekennzeichnet, dass** das Sensorelement mindestens ein Kraftmesselement (14) enthält, mit dem eine auf das Trennelement (12) wirkende Kraft messbar ist, wobei ein Teil der Masse des Kraftmesselementes (14) zur wirksamen Masse Mm des Trennelementes (12) zu rechnen ist und der andere Teil der Masse des Kraftmesselementes (14) zur wirksamen Masse Mr des Referenzkörpers (15) zu rechnen ist.

6. Druckmessgerät nach einem der Ansprüche 1 bis 4, **dadurch gekennzeichnet, dass** das Sensorelement Mittel zur Messung der Abstandsdifferenz zwischen der Oberfläche (17) des Trennelementes (12) und der Referenzfläche (16) des Referenzkörpers (15) enthält.

7. Druckmessgerät nach einem der Ansprüche 1 bis 4, **dadurch gekennzeichnet, dass** das Sensorelement mindestens ein Schwingelement (41) und Mittel zur Messung einer Änderung der Resonanzfrequenz des so angeordneten Schwingelementes (41) enthält.

8. Druckmessgerät nach einem der Ansprüche 1 bis 7, **dadurch gekennzeichnet, dass** die Dehnsteifigkeit Cr der Aufhängung (18) wesentlich grösser ist als die Dehnsteifigkeit Cm des Trennelementes (12).

**Patentansprüche für folgende Vertragsstaaten : AT, CH, LI, DE, FR, GB**

1. Druckmessgerät, welches eine Montageplatte (11) und ein flexibles Trennelement (12) enthält, welches in einer Öffnung (13) der Montageplatte (11) angeordnet und daran befestigt ist und auf welches Trennelement (12) bei der Druckmessung ein zu messender Druck wirkt, welches Druckmessgerät ferner

   (a) einen Referenzkörper (15) enthält, welcher mit der Montageplatte (11) über eine Aufhängung (18) verbunden ist und eine Referenzfläche (16) hat, die gegenüber einer Oberfläche (17) des Trennelementes (12) liegt, und
   (b) ein Sensorelement (14, 31, 32, 41) enthält, welches zwischen dem Trennelement (12) und dem Referenzkörper (15) angeordnet ist,

   wobei der Referenzkörper (15) und die Aufhängung (18) so beschaffen sind, dass dann, wenn das ganze Druckmessgerät unter der Einwirkung einer Beschleunigung steht, die dadurch verursachte Auslenkung der Referenzfläche (16) des Referenzkörpers (15) gleich gross ist wie die beschleunigungsbedingte Auslenkung der Oberfläche (17) des Trennelementes (12)und
   wobei das Trennelement (12) und die Aufhängung (18) aus dem gleichen Werkstoff hergestellt sind.

2. Druckmessgerät, welches eine Montageplatte (11) und ein flexibles Trennelement (12) enthält, welches in einer Öffnung (13) der Montageplatte (11) angeordnet und daran befestigt ist und auf welches Trennelement (12) bei der Druckmessung ein zu messender Druck wirkt, welches Druckmessgerät ferner

   (a) einen Referenzkörper (15) enthält, welcher mit der Montageplatte (11) über eine Aufhängung (18) verbunden ist und eine Referenzfläche (16) hat, die gegenüber einer Oberfläche (17) des Trennelementes (12) liegt, und
   (b) ein Sensorelement (31, 32) enthält, welches zwischen dem Trennelement (12) und dem Referenzkörper (15) angeordnet ist und welches Mittel zur Messung der Abstandsdifferenz zwischen der Oberfläche (17) des Trennelementes (12) und der Referenzfläche (16) des Referenzkörpers (15) enthält,

   wobei der Referenzkörper (15) und die Aufhängung (18) so beschaffen sind, dass dann, wenn das ganze Druckmessgerät unter der Einwirkung einer Beschleunigung steht, die dadurch verursachte Auslenkung der Referenzfläche (16) des Referenzkörpers (15) gleich gross ist wie die beschleunigungsbedingte Auslenkung der Oberfläche (17) des Trennelementes (12).

3. Druckmessgerät, welches eine Montageplatte (11) und ein flexibles Trennelement (12) enthält, welches in einer Öffnung (13) der Montageplatte (11) angeordnet und daran befestigt ist und auf welches Trennelement (12) bei der Druckmessung ein zu messender Druck wirkt, welches Druckmessgerät ferner

   (a) einen Referenzkörper (15) enthält, welcher mit der Montageplatte (11) über eine Aufhängung (18) verbunden ist und eine Referenzfläche (16) hat, die gegenüber einer Oberfläche (17) des Trennelementes (12) liegt, und
   (b) ein Sensorelement (41) enthält, welches zwischen dem Trennelement (12) und dem Referenzkörper (15) angeordnet ist und welches mindestens ein Schwingelement (41) und Mittel zur Messung einer Änderung der Resonanzfrequenz des so angeordneten Schwingelementes (41) enthält,

   wobei der Referenzkörper (15) und die Aufhängung (18) so beschaffen sind, dass dann, wenn das ganze Druckmessgerät unter der Einwirkung einer Beschleunigung steht, die dadurch verursachte Auslenkung der Referenzfläche (16) des Referenzkörpers (15) gleich gross ist wie die beschleunigungsbedingte Auslenkung der Oberfläche (17) des Trennelementes (12).

4. Druckmessgerät, welches eine Montageplatte (11) und ein flexibles Trennelement (12) enthält, welches in einer Öffnung (13) der Montageplatte (11) angeordnet und daran befestigt ist und auf welches Trennelement (12) bei der Druckmessung ein zu messender Druck wirkt, welches Druckmessgerät ferner

   (a) einen Referenzkörper (15) enthält, welcher mit der Montageplatte (11) über eine Aufhängung (18) verbunden ist und eine Referenzfläche (16) hat, die gegenüber einer Oberfläche (17) des Trennelementes (12) liegt, und
   (b) ein Sensorelement (14) enthält, welches zwischen dem Trennelement (12) und dem Referenzkörper (15) angeordnet ist und welches durch Isoliermittel (21, 22) von dem Trennelement (12) und dem Referenzkörper (15) elektrisch isoliert ist,

wobei der Referenzkörper (15) und die Aufhängung (18) so beschaffen sind, dass dann, wenn das ganze Druckmessgerät unter der Einwirkung einer Beschleunigung steht, die dadurch verursachte Auslenkung der Referenzfläche (16) des Referenzkörpers (15) gleich gross ist wie die beschleunigungsbedingte Auslenkung der Oberfläche (17) des Trennelementes (12).

5. Druckmessgerät gemäss einem der Ansprüche 1 bis 4, **dadurch gekennzeichnet, dass** die wirksame Masse Mm und die Dehnsteifigkeit Cm des Trennelementes (12) einerseits, und die wirksame Masse Mr und die Dehnsteifigkeit Cr des Referenzkörpers (15) andererseits, zueinander so abgestimmt sind, dass dann, wenn das ganze Druckmessgerät unter der Einwirkung einer Beschleunigung steht, die dadurch verursachten axialen Auslenkungen der Oberfläche (17) des Trennelementes (12) und der Referenzfläche (16) des Referenzkörpers (15) gleich gross sind.

6. Druckmessgerät gemäss Anspruch 5, **dadurch gekennzeichnet, dass** Mm/Cm = Mr/Cr, wobei in Mm ein Teil der Masse von allfälligen Elementen eingeschlossen ist, die mit dem Trennelement (12) verbunden sind, und wobei in Mr ein Teil der Masse von allfälligen Elementen eingeschlossen ist, die mit dem Referenzkörper (15) verbunden sind.

7. Druckmessgerät nach einem der Ansprüche 1 bis 6, **dadurch gekennzeichnet, dass** das Sensorelement mindestens ein Kraftmesselement (14) enthält, mit dem eine auf das Trennelement (12) wirkende Kraft messbar ist, wobei ein Teil der Masse des Kraftmesselementes (14) zur wirksamen Masse Mm des Trennelementes (12) zu rechnen ist und der andere Teil der Masse des Kraftmesselementes (14) zur wirksamen Masse Mr des Referenzkörpers (15) zu rechnen ist.

8. Druckmessgerät nach einem der Ansprüche 1 bis 7, **dadurch gekennzeichnet, dass** die Dehnsteifigkeit Cr der Aufhängung (18) wesentlich grösser ist als die Dehnsteifigkeit Cm des Trennelementes (12).

**Claims**

**Claims for the following Contracting States : DK, IT**

1. Pressure measuring device comprising a mounting plate (11) and a flexible separating element (12) disposed in an opening (13) of the mounting plate (11) and fastened thereto, the separating element (12) being under the action of a pressure to be measured during the pressure measurement,
   **characterised in that** the pressure measuring device further comprises

   (a) a reference body (15) connected to the mounting plate (11) via a suspension (18) and comprising a reference surface (16) disposed opposite a surface (17) of the separating element (12), and
   (b) a sensor element (14, 41) arranged between the separating element (12) and the reference body (15),
   the reference body (15) and the suspension (18) being so designed that when the entire pressure measuring device is subject to an acceleration, the resulting excursion of the reference surface (16) of the reference body (15) is equal to the excursion of the surface (17) of the separating element (12) on account of the acceleration.

2. Pressure measuring device according to claim 1, **characterised in that** the effective mass Mm and the tensile rigidity Cm of the separating element (12), on one hand, and the effective mass Mr and the tensile rigidity Cr of the reference body (15), on the other hand, are adjusted to each other in such a manner that when the entire pressure measuring device is subject to an acceleration, the resulting axial excursions of the surface (17) of the separating element (12) and of the reference surface (16) of the reference body (15) are equal.

3. Pressure measuring device according to claim 2, **characterised in that** Mm/Cm = Mr/Cr, where Mm includes a part of the mass of possible elements connected to the separating element (12), and Mr includes a part of the mass of possible elements connected to the reference body (15).

4. Pressure measuring device according to claim 1, **characterised in that** the separating element (12) and the suspension (18) are manufactured from the same material.

5. Pressure measuring device according to one of claims 1 to 4, **characterised in that** the sensor element comprises at least one force-sensing element (14) allowing to measure a force acting upon the separating element (12), a part of the mass of the force-sensing element (14) being added to the effective mass Mm of the separating element (12), and the other part of the mass of the force-sensing element (14) being added to the effective mass Mr of the reference body (15).

6.  Pressure measuring device according to one of claims 1 to 4, **characterised in that** the sensor element comprises means for measuring the variation of the distance between the surface (17) of the separating element (12) and the reference surface (16) of the reference body (15).

7.  Pressure measuring device according to one of claims 1 to 4, **characterised in that** the sensor element comprises at least one oscillating element (41) and means for measuring a variation of the resonance frequency of the oscillating element (41) disposed in this manner.

8.  Pressure measuring device according to one of claims 1 to 7, **characterised in that** the tensile rigidity Cr of the suspension (18) is substantially greater than the tensile rigidity Cm of the separating element (12).


**Claims for the following Contracting States : AT, CH, LI, DE, FR, GB**

1.  Pressure measuring device comprising a mounting plate (11) and a flexible separating element (12) disposed in an opening (13) of the mounting plate (11) and fastened thereto, the separating element (12) being under the action of a pressure to be measured during the pressure measurement, the pressure measuring device further comprising

    (a) a reference body (15) connected to the mounting plate (11) via a suspension (18) and comprising a reference surface (16) disposed opposite a surface (17) of the separating element (12), and
    (b) a sensor element (14, 31, 32, 41) arranged between the separating element (12) and the reference body (15),
    the reference body (15) and the suspension (18) being so designed that when the entire pressure measuring device is subject to an acceleration, the resulting excursion of the reference surface (16) of the reference body (15) is equal to the excursion of the surface (17) of the separating element (12) on account of the acceleration, and
    the separating element (12) and the suspension (18) being manufactured from the same material.

2.  Pressure measuring device comprising a mounting plate (11) and a flexible separating element (12) disposed in an opening (13) of the mounting plate (11) and fastened thereto, the separating element (12) being under the action of a pressure to be measured during the pressure measurement, the pressure measuring device further comprising

    (a) a reference body (15) connected to the mounting plate (11) via a suspension (18) and comprising a reference surface (16) disposed opposite a surface (17) of the separating element (12), and
    (b) a sensor element (31, 32) arranged between the separating element (12) and the reference body (15) and comprising means for measuring the variation of the distance between the surface (17) of the separating element (12) and the reference surface (16) of the reference body (15),
    the reference body (15) and the suspension (18) being so designed that when the entire pressure measuring device is subject to an acceleration, the resulting excursion of the reference surface (16) of the reference body (15) is equal to the excursion of the surface (17) of the separating element (12) on account of the acceleration

3.  Pressure measuring device comprising a mounting plate (11) and a flexible separating element (12) disposed in an opening (13) of the mounting plate (11) and fastened thereto, the separating element (12) being under the action of a pressure to be measured during the pressure measurement, the pressure measuring device further comprising

    (a) a reference body (15) connected to the mounting plate (11) via a suspension (18) and comprising a reference surface (16) disposed opposite a surface (17) of the separating element (12), and
    (b) a sensor element (41) arranged between the separating element (12) and the reference body (15) and comprising at least one oscillating element (41) and means for measuring a variation of the resonance frequency of the oscillating element (41) disposed in this manner,
    the reference body (15) and the suspension (18) being so designed that when the entire pressure measuring device is subject to an acceleration, the resulting excursion of the reference surface (16) of the reference body (15) is equal to the excursion of the surface (17) of the separating element (12) on account of the acceleration.

4. Pressure measuring device comprising a mounting plate (11) and a flexible separating element (12) disposed in an opening (13) of the mounting plate (11) and fastened thereto, the separating element (12) being under the action of a pressure to be measured during the pressure measurement, the pressure measuring device further comprising

(a) a reference body (15) connected to the mounting plate (11) via a suspension (18) and comprising a reference surface (16) disposed opposite a surface (17) of the separating element (12), and

(b) a sensor element (14) arranged between the separating element (12) and the reference body (15) and electrically insulated from the separating element (12) and the reference body (15) by insulating means (21, 22),

the reference body (15) and the suspension (18) being so designed that when the entire pressure measuring device is subject to an acceleration, the resulting excursion of the reference surface (16) of the reference body (15) is equal to the excursion of the surface (17) of the separating element (12) on account of the acceleration.

5. Pressure measuring device according to one of claims 1 to 4, **characterised in that** the effective mass Mm and the tensile rigidity Cm of the separating element (12), on one hand, and the effective mass Mr and the tensile rigidity Cr of the reference body (15), on the other hand, are adjusted to each other in such a manner that when the entire pressure measuring device is subject to an acceleration, the resulting axial excursions of the surface (17) of the separating element (12) and of the reference surface (16) of the reference body (15) are equal.

6. Pressure measuring device according to claim 5, **characterised in that** Mm/Cm = Mr/Cr, where Mm includes a part of the mass of possible elements connected to the separating element (12), and Mr includes a part of the mass of possible elements connected to the reference body (15).

7. Pressure measuring device according to one of claims 1 to 6, **characterised in that** the sensor element comprises at least one force-sensing element (14) allowing to measure a force acting upon the separating element (12), a part of the mass of the force-sensing element (14) being added to the effective mass Mm of the separating element (12), and the other part of the mass of the force-sensing element (14) being added to the effective mass Mr of the reference body (15).

8. Pressure measuring device according to one of claims 1 to 7, **characterised in that** the tensile rigidity Cr of the suspension (18) is substantially greater than the tensile rigidity Cm of the separating element (12).

## Revendications

**Revendications pour les Etats contractants suivants : DK, IT**

1. Dispositif de mesure de pression, comprenant une plaque de montage (11) et un élément de séparation (12) flexible, agencé dans une ouverture (13) de la plaque de montage (11) et fixé à celle-ci, ledit élément de séparation (12) étant soumis, pendant la mesure de la pression, à une pression à mesurer, **caractérisé en ce que** le dispositif de mesure de pression comporte en outre

(a) un corps de référence (15) relié à la plaque de montage (11) par l'intermédiaire d'une suspension (18) et comportant une surface de référence (16) disposée en face dune surface (17) de l'élément de séparation (12), et

(b) un élément capteur (14, 41), disposé entre l'élément de séparation (12) et le corps de référence (15),

le corps de référence (15) et la suspension (18) étant exécutés de telle manière que lorsque le dispositif de mesure de pression entier est sous l'action d'une accélération, l'excursion consécutive de la surface de référence (16) du corps de référence (15) est égale à l'excursion, en raison de l'accélération, de la surface (17) de l'élément de séparation (12).

2. Dispositif de mesure de pression selon la revendication 1, **caractérisé en ce que** la masse effective Mm et la rigidité de traction Cm de l'élément de séparation (12), d'une part, et la masse effective Mr et la rigidité de traction Cr du corps de référence (15), d'autre part, sont ajustées l'une à l'autre de telle manière que lorsque le dispositif de mesure de pression entier est soumis à une accélération, les excursions axiales consécutives de la surface (17) de l'élément de séparation (12) et de la surface de référence (16) du corps de référence (15) sont égales.

3. Dispositif de mesure de pression selon la revendication 2, **caractérisé en ce que** Mm/Cm = Mr/Cr, où Mm inclut une partie de la masse d'éventuels éléments reliés à l'élément de séparation (12), et Mr inclut une partie de la masse d'éventuels éléments reliés au corps de référence (15).

**4.** Dispositif de mesure de pression selon la revendication 1, **caractérisé en ce que** l'élément de séparation (12) et la suspension (18) sont fabriqués du même matériau.

**5.** Dispositif de mesure de pression selon l'une des revendications 1 à 4, **caractérisé en ce que** l'élément capteur comprend au moins un élément de mesure de force (14) permettant de mesurer une force agissant sur l'élément de séparation (12), une partie de la masse de l'élément de mesure de force (14) étant affectée à la masse effective Mm de l'élément de séparation (12) et l'autre partie de la masse de l'élément de mesure de force (14) étant affectée à la masse effective Mr du corps de référence (15).

**6.** Dispositif de mesure de pression selon l'une des revendications 1 à 4, **caractérisé en ce que** l'élément capteur comprend des moyens de mesure de la variation de l'écart entre la surface (17) de l'élément de séparation (12) et la surface de référence (16) du corps de référence (15).

**7.** Dispositif de mesure de pression selon Tune des revendications 1 à 4, **caractérisé en ce que** l'élément capteur comprend au moins un élément oscillant (41) et des moyens de mesure d'une variation de la fréquence de résonance de l'élément oscillant (41) agencé de cette manière.

**8.** Dispositif de mesure de pression selon l'une des revendications 1 à 7, **caractérisé en ce que** la rigidité de traction Cr de la suspension (18) est substantiellement plus grande que la rigidité de traction Cm de l'élément de séparation (12).

**Revendications pour les Etats contractants suivants : AT, CH, LI, DE, FR, GB**

**1.** Dispositif de mesure de pression, comprenant une plaque de montage (11) et un élément de séparation (12) flexible, agencé dans une ouverture (13) de la plaque de montage (11) et fixé à celle-ci, ledit élément de séparation (12) étant soumis, pendant la mesure de pression, à une pression à mesurer, le dispositif de mesure de pression comportant en outre

(a) un corps de référence (15) relié à la plaque de montage (11) par l'intermédiaire d'une suspension (18) et comportant une surface de référence (16) disposée en face dune surface (17) de l'élément de séparation (12), et
(b) un élément capteur (14, 31, 32, 41), disposé entre l'élément de séparation (12) et le corps de référence (15),

le corps de référence (15) et la suspension (18) étant exécutés de telle manière que lorsque le dispositif de mesure de pression entier est sous faction d'une accélération, l'excursion consécutive de la surface de référence (16) du corps de référence (15) est égale à l'excursion, en raison de l'accélération, de la surface (17) de l'élément de séparation (12),

l'élément de séparation (12) et la suspension (18) étant fabriqués du même matériau.

**2.** Dispositif de mesure de pression, comprenant une plaque de montage (11) et un élément de séparation (12) flexible, agencé dans une ouverture (13) de la plaque de montage (11) et fixé à celle-ci, ledit élément de séparation (12) étant soumis, pendant la mesure de la pression, à une pression à mesurer, le dispositif de mesure de pression comportant en outre

(a) un corps de référence (15) relié à la plaque de montage (11) par l'intermédiaire d'une suspension (18) et comportant une surface de référence (16) disposée en face dune surface (17) de l'élément de séparation (12), et
(b) un élément capteur (31, 32), disposé entre l'élément de séparation (12) et le corps de référence (15) et comprenant des moyens de mesure de la variation de l'écart entre la surface (17) de l'élément de séparation (12) et la surface de référence (16) du corps de référence (15),

le corps de référence (15) et la suspension (18) étant exécutés de telle manière que lorsque le dispositif de mesure de pression entier est sous l'action d'une accélération, l'excursion consécutive de la surface de référence (16) du corps de référence (15) est égale à l'excursion, en raison de l'accélération, de la surface (17) de l'élément de séparation (12).

**3.** Dispositif de mesure de pression, comprenant une plaque de montage (11) et un élément de séparation (12) flexible, agencé dans une ouverture (13) de la plaque de montage (11) et fixé à celle-ci, ledit élément de séparation (12) étant soumis, pendant la mesure de la pression, à une pression à mesurer, le dispositif de mesure de pression comportant en outre

(a) un corps de référence (15) relié à la plaque de montage (11) par l'intermédiaire d'une suspension (18) et comportant une surface de référence (16) disposée en face d'une surface (17) de l'élément de séparation (12), et
(b) un élément capteur (41), disposé entre l'élément de séparation (12) et le corps de référence (15) et comportant au moins un élément oscillant (41) et des moyens de mesure d'une variation de la fréquence de résonance de l'élément oscillant (41) agencé de cette manière,

le corps de référence (15) et la suspension (18) étant exécutés de telle manière que lorsque le dispositif de mesure de pression entier est sous l'action dune accélération, l'excursion consécutive de la surface de référence (16) du corps de référence (15) est égale à l'excursion, en raison de l'accélération, de la surface (17) de l'élément de séparation (12).

4. Dispositif de mesure de pression, comprenant une plaque de montage (11) et un élément de séparation (12) flexible, agencé dans une ouverture (13) de la plaque de montage (11) et fixé à celle-ci, ledit élément de séparation (12) étant soumis, pendant la mesure de la pression, à une pression à mesurer, le dispositif de mesure de pression comportant en outre

(a) un corps de référence (15) relié à la plaque de montage (11) par l'intermédiaire d'une suspension (18) et comportant une surface de référence (16) disposée en face d'une surface (17) de l'élément de séparation (12), et

(b) un élément capteur (14), disposé entre l'élément de séparation (12) et le corps de référence (15) et électriquement isolé de l'élément de séparation (12) et du corps de référence (15) par des moyens isolants (21, 22),

le corps de référence (15) et la suspension (18) étant exécutés de telle manière que lorsque le dispositif de mesure de pression entier est sous l'action dune accélération, l'excursion consécutive de la surface de référence (16) du corps de référence (15) est égale à l'excursion, en raison de l'accélération, de la surface (17) de l'élément de séparation (12).

5. Dispositif de mesure de pression selon l'une des revendications 1 à 4, **caractérisé en ce que** la masse effective Mm et la rigidité de traction Cm de l'élément de séparation (12), d'une part, et la masse effective Mr et la rigidité de traction Cr du corps de référence (15), d'autre part, sont ajustées l'une à l'autre de telle manière que lorsque le dispositif de mesure de pression entier est soumis à une accélération, les excursions axiales consécutives de la surface (17) de l'élément de séparation (12) et de la surface de référence (16) du corps de référence (15) sont égales.

6. Dispositif de mesure de pression selon la revendication 5, **caractérisé en ce que** Mm/Cm = Mr/Cr, où Mm inclut une partie de la masse d'éventuels éléments reliés à l'élément de séparation (12), et Mr inclut une partie de la masse d'éventuels éléments reliés au corps de référence (15).

7. Dispositif de mesure de pression selon Tune des revendications 1 à 6, **caractérisé en ce que** l'élément capteur comprend au moins un élément de mesure de force (14) permettant de mesurer une force agissant sur l'élément de séparation (12), une partie de la masse de l'élément de mesure de force (14) étant affectée à la masse effective Mm de l'élément de séparation (12) et l'autre partie de la masse de l'élément de mesure de force (14) étant affectée à la masse effective Mr du corps de référence (15).

8. Dispositif de mesure de pression selon l'une des revendications 1 à 7, **caractérisé en ce que** la rigidité de traction Cr de la suspension (18) est substantiellement plus grande que la rigidité de traction Cm de l'élément de séparation (12).

**Fig. 1**

Fig. 2

**Fig. 3**